# EUROPÄISCHE PATENTSCHRIFT

(11) **EP 0 823 099 B1**
(45) Veröffentlichungstag und Bekanntmachung des Hinweises auf die Patenterteilung: **10.04.2013**
(21) Anmeldenummer: 97917234.3
(22) Anmeldetag: 21.02.1997
(51) Int. Cl.: G06K 19/077

(54) **KUNSTSTOFFKARTE MIT AUS DIESER HERAUSTRENNBARER MINICHIPKARTE**
PLASTICS CARD COMPRISING A MINI-SMART-CARD WHICH CAN BE SEPARATED THEREFROM
CARTE EN PLASTIQUE MUNIE D'UNE CARTE AMOVIBLE A PUCE MINIATURE

(30) Priorität: 23.02.1996 DE 19606789
(43) Veröffentlichungstag der Anmeldung: 11.02.1998
(73) Patentinhaber: Morpho Cards GmbH, 24220 Flintbek (DE)
(72) Erfinder: TRÜGGELMANN, Uwe, D-33609 Paderborn (DE); SCHULTE, Thomas-Lothar, D-33100 Paderborn (DE); BLOME, Rainer, D-33106 Paderborn (DE)
(74) Vertreter: Richardt Patentanwälte GbR
(86) Internationale Anmeldenummer: PCT/DE1997/000316
(87) Internationale Veröffentlichungsnummer: WO 1997/031334

(56) Entgegenhaltungen:
- EP-A- 0 638 873
- DE-A- 4 007 221
- DE-C- 4 040 296

## Beschreibung

Die Erfindung bezieht sich auf eine Kunststoffkarte gemäß dem Oberbegriff von Anspruch 1.Eine derartige Kunsstoffkarte ist aus der DE 40 07 221 A bekannt. In der Kunststoffkarte ist eine Minichipkarte heraustrennbar gehalten. Dazu weist sie mehrere Sollbruchstellen zwischen der Trägerkarte und der Minichipkarte auf, die im übrigen von einem Freischnitt umgeben ist. In einer Ausführung ist die Sollbruchstelle an einem Haltesteg, der den Freischnitt überbrückt, unmittelbar an die Trägerkarte angrenzend in Form einer Kerbe ausgebildet Das Heraustrennen der Minichipkarte aus der rahmenförmigen Trägerkarte durch ein Auspressen der Minichipkarte zwecks Trennung der Sollbruchstellen erbringt hohe Biegekräfte auf den Chip und seine Kontaktverbindungen, die zu einer Zerstörung führen können.

Weiterhin ist aus der EP 0638873A eine Trägerkarte mit einer in einem Freischnitt angeordneten Minichipkarte bekannt, die mittels einer rückseitig angeordneten Klebefolie, die den Freischnitt überdrückt, darin gehalten ist. Von einer Kante der Trägerkarte zur anderen führt durch den Freischnitt unterbrochen geradlinig eine Sollbruchlinie, die eingeknickt dem Ablösen oder Zerreißen der Klebefolie dient, wonach die Minichipkarte herausgelöst werden kann. Das Aufbringen der Klebefolie und deren Ablösen sowie das Einfräsen eines Freischnittes sind jeweils aufwendig.

Weiterhin ist aus der DE 40 40 296 C eine Trägerkarte bekannt, die in einem Freischnitt an einer Seite eine Minichipkarte mit einer Sollbruchverbindung hält. Es ist nicht sichergestellt, daß bei einer Vereinzelung die Minichipkarten benachbarter Karten sich nicht verhaken. Chipkarten haben mittlerweile eine starke Verbreitung z.B. als Telefonkarten, Krankenversichertenkarten, als Identifikations- und Zugangsberechtigungskarten für Mobilfunksysteme, wie GSM, oder als Kredit- und/oder Geldkarten gefunden.

Dabei sind aus Gründen der Standardisierung die Abmessungen der Chipkarten sowie die Lage der Kontaktflächen durch internationale Normen (7810, 7816-2) festgelegt. Chipkarten gemäß diesem Standard werden als ID1 Karten bezeichnet.

Miniaturisierte Schreib-/Lesegeräte für Chipkarten, wie sie bereits häufig in sehr kleinen Mobilfunkgeräten eingesetzt werden, erfordern jedoch sogenannte Minichipkarten, da Chipkarten im Standard ID1 Format für diese Zwecke zu groß sind. Diese Minichipkarte unterscheidet sich von der Chipkarte im ID1 Format lediglich durch kleinere äußere Abmaße und eine andere Kontur. Die heute bereits allgemein übliche Form der Minichipkarte wird als ID000 Format bezeichnet und wird demnächst ebenfalls in einer internationalen Norm definiert werden.

Diese Minichipkarte mit ihren Abmaßen ist jedoch in der Welt der Chipkarten nicht isoliert vom Standard ID1 Kartenformat zu betrachten. Dies hat verschiedene Gründe:
a) Die bestehenden Produktionsanlagen und Verfahren sind für die Herstellung von Chipkarten im ID1 Format ausgelegt. Die Umstellung der bestehenden oder die Schaffung neuer Produktionsanlagen für die unmittelbare Herstellung von Chipkarten im ID000 Format wäre sehr aufwendig und teuer. Darüber hinaus ist auch die weitere Handhabung der Chipkarten nach der Kartenherstellung in sogenannten Kartenpersonalisierungsanlagen für das ID1 Format ausgelegt. Minichipkarten werden unter anderem aus diesem Grunde in der Art hergestellt, daß zunächst Chipkarten im ID1 Format produziert werden und anschließend die Minichipkarten aus dem Kartenkörper herausgetrennt werden. Dabei kann die Minichipkarte bereits beim Kartenhersteller z.B. durch Stanzen vollständig aus dem Kartenkörper im ID1 Format herausgetrennt werden; alternativ dazu wird die Minichipkarte nur teilweise aus dem Kartenkörper im ID1 Format ausgestanzt, wobei die Minichipkarte über Verbindungsstege und/oder Einkerbungen mit dem Kartenkörper im ID1 Format so verbunden bleibt, daß der Kunde (Karteninhaber) die Minichipkarte ohne weitere Hilfsmittel heraustrennen (abbrechen, abknicken,abreißen) kann.
b) Ein weiterer Grund dafür, nicht unmittelbar Minichipkarten herzustellen, liegt in der größeren Flexibilität dieser Vorgehensweise. Wenn ein Kartenherausgeber, z.B. der Betreiber eines Mobilfunknetzes, kurzfristig mehr Minichipkarten als Chipkarten im ID1 Format benötigt als ursprünglich bestellt, so kann der Kartenhersteller ohne großen Aufwand aus Chipkarten im ID1 Format Minichipkarten oder Karten mit heraustrennbaren Minichipkarten herstellen.
c) Da die Minichipkarte relativ klein und "unscheinbar" ist, ist die Gefahr recht groß, daß diese auf dem Weg vom Kartenhersteller über den Kartenherausgeber und schließlich den Karteninhaber bis zum Einsatz in ein Endgerät verloren geht. Schon aus diesem Grunde ist ein größerer Kartenkörper als Träger für die Minichipkarte, gewissermaßen als handliche Umverpackung, sinnvoll.
d) Auf der großflächigen Trägerkarte im ID1 Format kann drucktechnisch Werbung und/oder Information gut aufgebracht werden, was auf der relativ kleinen Oberfläche der Minichipkarte schlecht möglich ist.

### Zum Stand der Technik:

Es sind Normformat-Karten bekannt, bei denen die Minichipkarten über Verbindungsstege mit dem Trägerkartenkörper fest verbunden sind. Diese Karten lassen sich wie herkömmliche Chipkarten im Normformat verwenden. Zum Gebrauch der Minichipkarte für sich allein, muß diese manuell aus der Trägerkarte herausgetrennt werden, indem die Verbindungsstege durchbrochen werden. Ein Problem bei dieser Art der Befestigung der Minichipkarte in der Trägerkarte ist, daß beim Herausbrechen der Minichipkarten auf das Chipmodul und den darin befindlichen Halbleiterbaustein relativ starke Biegekräfte ausgeübt werden, die zu einer Beschädigung und damit zu einem Ausfall der Minichipkarte führen können. Ein weiterer Nachteil bei dieser Art der Befestigung ist, daß nach dem Herausbrechen der Minichipkarte oftmals Reststege an der Minichipkarte stehen bleiben, so daß diese dann keine saubere Kontur aufweist; außerdem kann es geschehen, daß die Minichipkarte beim Herausbrechen einreißt.

Um die oben genannten Nachteile zu vermeiden, wird in der DE 41 32 720 vorgeschlagen, die Minichipkarte beim Kartenhersteller vollständig aus der Trägerkarte herauszustanzen und die Minichipkarte mittels eines zumindest teilweise sowohl auf der Trägerkarte als auch auf der Minichipkarte aufgebrachten Klebefilms in der Trägerkarte zu fixieren. Diese Art der Befestigung hat jedoch den Nachteil, daß es sehr unerwünscht ist, auf die meistens aufwendig bedruckten Oberflächen von Trägerkarte und Minichipkarte einen Klebfilm aufzubringen, der unter Umständen beim Abziehen Kleberückstände hinterläßt oder die Kartenoberfläche beschädigt; ist andererseits die Klebehaftung zu gering oder läßt diese im Laufe der Zeit nach, so ist eine zuverlässige Befestigung nicht mehr gegeben. Darüber hinaus kann ein dünner Klebefilm sehr leicht einreißen.

Eine andere Art der Befestigung einer Minichipkarte in einer Trägerkarte vom Normformat ist in der EP 0 495 216 beschrieben. Diese Art der Befestigung gestattet es dem Kunden, die Minichipkarte in einfacher Weise, beschädigungsfrei von der Trägerkarte zu trennen; gleichzeitig ist eine sichere Fixierung der Minichipkarte gewährleisten Die Kartenoberfläche wird dabei nicht von einem Klebefilm beeinträchtigt. Bei der in der EP 0 495 216 gezeigten Minichipkarte vom Format ID000 ist diese entlang von vier Seitenkanten vollständig freigeschnitten, wohingegen entlang ihrer fünften Seitenkante zwischen Minichipkarte und Trägerkarte eine geradlinige Kerbe eingebracht ist. Diese Kerbe bildet einen Scharniersteg zum leichten Ausbrechen der Minichipkarte. Ein Heraustrennen der Minichipkarte erfolgt durch Schwenken um 180° aus der Ebene der Trägerkarte heraus, wodurch das Trennlinienmaterial entlang der Kerbe ermüdet und bricht. Nachteilig an dieser Art der Fixierung der Minichipkarte in einer Trägerkarte ist jedoch, daß die Minichipkarte nach dem Freistanzen aus der Ebene der Trägerkarte herausstehen kann. Dies hat zur Folge, daß derartige Karten, wenn sie in einem Kartenstapel angeordnet sind, sich ineinander verhaken können, wodurch eine Kartenvereinzelung, die eine relative Verschiebung der Karten gegeneinander erfordert, erschwert wird oder gar unmöglich gemacht wird. Eine derartige Vereinzelung von Karten aus einem Kartenstapel ist jedoch bei der sogenannten Katenpersonalisierung unumgänglich.

Vor diesem Hintergrund ist es die Aufgabe der Erfindung, eine Kunststoffkarte mit darin heraustrennbar fixierter Minichipkarte so auszubilden, daß einerseits eine zuverlässige Fixierung der Minichipkarte gewährleistet ist, andererseits die Minichipkarte leicht, beschädigungsfrei und mit einer sauberen Kontur herausgetrennt werden kann und darüber hinaus eine Vereinzelung dieser Kunststoffkarten aus einem Kartenstapel problemlos möglich ist.

Diese Aufgabe wird erfindungsgemäß durch die kennzeichnenden Merkmale des Patentanspruches 1 gelöst. Die sich daran anschließenden Unteransprüche enthalten vorteilhafte und förderliche Ausgestaltungen der Erfindung.

Bei der erfindungsgemäßen Kunststoffkarte ist zwischen der Minichipkarte und der Trägerkarte ein erster Sollbruchbereich in Form einer Einkerbung und/oder mindestens eines Verbindungssteges geschaffen. Beabstandet zu diesem ersten Sollbruchbereich ist ein zweiter Sollbruchbereich zwischen Minichipkarte und der Trägerkarte in Form einer Einkerbung und/oder mindestens eines Verbindungssteges geschaffen ist. Im übrigen ist die Minichipkarte entlang ihrer Außenkontur bis auf die beiden Sollbruchbereiche vollständig freigeschnitten.

Nun ist korrespondierend zu einer der beiden Sollbruchstellen auf der Trägerkarte eine Sollbruchlinie/Sollknicklinie bzw. eine Sollknickline in Form einer Einkerbung und/oder in Form von mehreren, auf einer Geraden liegenden, durch Freischnitte gebildeten Sollbruchstellen eingebracht. Die Sollbruchlinie/Sollknicklinie/Sollknicklinie verläuft dabei so auf der Trägerkarte, daß diese vom Freischnitt entlang der Außenkontur der Minichipkarte unterbrochen ist.

Die Minichipkarte wird nun folgendermaßen aus der Trägerkarte herausgelöst:
Zuerst wird die Trägerkarte entlang der Sollbruchlinie/Sollknicklinie/Sollknicklinie durchgebrochen bzw. geknickt, wodurch gleichzeitig der zu der Sollbruchlinie/Sollknicidinie/Sollknicklinie korrespondierende Sollbruchbereich zwischen Minichipkarfie und Trägerkarte getrennt wird. Bei dieser Art des Durchtrennen des Sollbruchbereiches werden auf die Minichipkarte kaum schädliche Biegekräfte übertragen. Anschließend ist die Minichipkarte dann nur noch über den anderen intakten Sollbruchbereich mit der Trägerkarte verbunden. Letztendlich wird die Minichipkarte dann durch das Verschwenken der Minichipkarte aus der Ebene der Trägerkarte heraus entlang des noch intakten Sollbruchbereiches abgetrennt, indem das Trennlinienmaterial entlang des Sollbruchbereiches bricht. Auch hierbei treten kaum schädliche Belastungen für die Minichipkarte auf.

Die Minichipkarte kann somit in einfacher Weise grat- und fransenfrei aus der Trägerkarte herausgetrennt werden.

Durch die Fixierung mittels zweier Sollbruchbereiche ist die Minichipkarte sicher in der Trägerkarte gehalten. Eine Vereinzelung der erfindungsgemäßen Kunststoffkarten ist problemlos möglich, da die Minichipkarte hierbei genau in der Ebene der Trägerkarte liegt.

Die Erfindung ist nicht auf Kunststoffkarten im ID1 Format und Minichipkarten im ID000 Format beschränkt. Sie ist nicht auf bestimmte Abmaße und Konturen von Trägerkarte und Minichipkarte begrenzt. Vielmehr stellt sie eine zufriedenstellende Lösung für eine zu trennende Halteverbindung zwischen einer Trägerkarte und einer Minichipkarte dar.

Bei der Minichipkarte kann es sich sowohl um eine mit Kontakten behaftete Chipkarte als auch um eine kontaktlose Chipkarte, z.B. einen Transponder, handeln. In allen Fällen ist ein den empfindlichen Chip schonendes Heraustrennen der Minichipkarte erforderlich.

An Hand der beigefügten Zeichnungen soll die Erfindung nachfolgend näher erläutert werden. Es zeigt:
- Fig. 1: eine Draufsicht auf die Vorderseite einer Karte im ID1 Format mit einer ID000 Minichipkarte,
- Fig.2: eine Draufsicht auf die Rückseite der Karte aus Fig.12,
- Fig.3: eine perspektivische Darstellung der Kunststoffkarte mit entlang der Sollbruchlinie/Söollknicklinie/Sollknicklinie abgeknickter Trägerkarte und durchtrennten ersten Sollbruchbereich zwischen Minichipkarte und Trägerkarte,
- Fig.4: eine perspektivische Darstellung der Kunststoffkarte mit zum Zwecke des vollständigen Heraustrennens aus der Ebene der Trägerkarte herausgeschwenkter Minichipkarte,
- Fig.5: eine perspektivische Darstellung der Kunststoffkarte mit abgeknickter Trägerkarte und vollständig herausgetrennter Minichipkarte,
- Fig.6: einen Schnitt durch die Kunststoffkarte aus Fig.1 entlang der Schnittlinie A-A,
- Fig.7: einen Schnitt durch die Kunststoffkarte aus Fig.1 entlang der Schnittlinie B-B,
- Fig.8: einen Schnitt durch die Kunststoffkarte aus Fig.1 entlang der Schnittlinie C-C,
- Fig.9 bis Fig.11: Schnitte durch die Kunststoffkarte aus Fig.1 entlang der Schnittlinie A-A, B-B, und C-C; mit anderen Einkerbungsprofilen als in den Fig.6 bis 8,
- Fig.12: eine Draufsicht auf die Unterseite einer Kunststoffkarte wie in Fig.2, wobei die Sollbruchlinie/Sollknicklinie/Sollknicklinie auf der Trägerkarte fluchtend zum ersten Sollbruchbereich verläuft,
- Fig.13: eine Draufsicht auf die Unterseite einer Kunststoffkarte wie in Fig.13, jedoch mit einem verlängerten ersten Sollbruchbereich zwischen Minichipkarte und Trägerkarte,
- Fig.14: eine Draufsicht auf die Vorderseite einer Kunststoffkarte, jedoch mit in Längsrichtung verlaufender Sollbruchlinie/Sollknicklinie/Sollknicklinie auf der Trägerkarte,
- Fig.15: eine Draufsicht auf die Rückseite der Kunststoffkarte aus Fig.15,
- Fig.16: eine Draufsicht auf eine Kunststoffkarte, bei der der erste Sollbruchbereich an einer Ecke der Minichipkarte angeordnet ist,
- Fig.17: eine Draufsicht auf die Vorderseite einer ID1 Karte zur Verdeutlichung der Kontaktflächenlage,
- Fig.18: eine Draufsicht auf die Vorderseite einer Kunststoffkarte mit einer kreisrunden Minichipkarte,
- Fig.19: eine Draufsicht auf die Vorderseite einer Kunststoffkarte mit einer dreieckigen Minichipkarte,
- Fig.20: eine Draufsicht auf die Vorderseite einer Kunststoffkarte, wobei die Sollbruchlinie/Sollknicklinie/Sollknicklinie außerhalb des Bereiches zwischenden beiden Sollbruchbereichen verläuft.

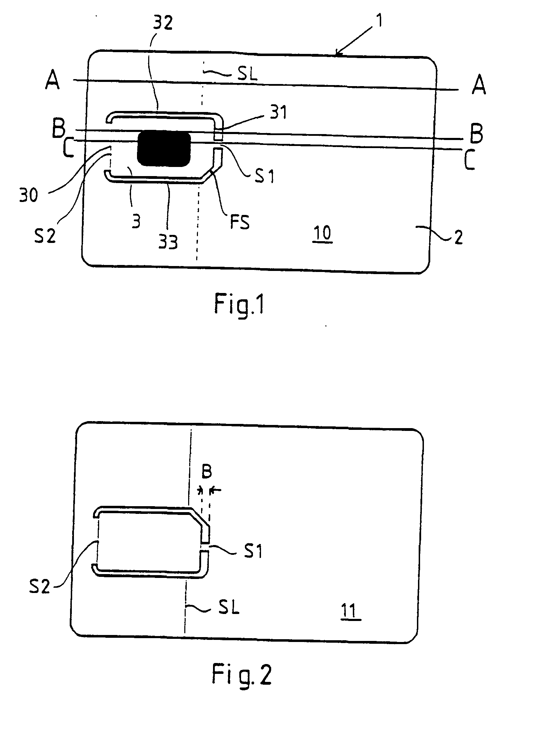

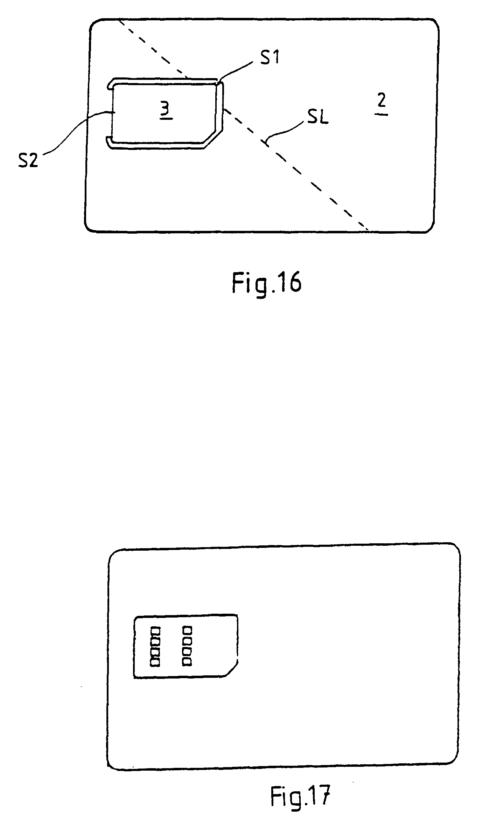

In Figur 1 ist eine Kunststoffkarte (1) im ID1 Format mit darin heraustrennbar gehaltener Minichipkarte (3) im ID000 Format gezeigt. Die Oberfläche des sich in der Minichipkarte (3) befindenden Chipmoduls ist durch den schwarzen Bereich gekennzeichnet. (Die Lage der Kontaktflächen über die die Kommunikation der Chipkarte mit externen Geräten erfolgt ist in Fig.17 dargestellt). die im wesentlichen fünfseitige Minichipkarte (3) ist dabei bis auf zwei Sollbruchbereiche (S1,S2) vollständig freigeschnitten.

Der erste Sollbruchbereich (S1) zwischen Minichipkarte (3) und Trägerkarte (2) ist in Form einer Einkerbung entlang derjenigen Seitenkante (30) der Minichipkarte (3) gebildet, die parallel und benachbart zur normgemäß linken Kante (12) der Kunststoffkarte (1) im ID1 Format verläuft. Diese Einkerbung ist vorzugsweise sowohl in die Vorder- als auch in die Rückseite der Kunststoffkarte (1) eingebracht. Die Einkerbung erstreckt sich über mehr als die Hälfte der entsprechenden Seitenkante (30) der Minichipkarte (3).

An der Seitenkante (31), die parallel zu der Seitenkante (30), die dem ersten Sollbruchbereich zugeordnet ist, befindet sich der zweite Sollbruchbereich (S2) zwischen Minichipkarte (3) und Trägerkarte (2). Dieser ist in Form eines schmalen durch den Freichschnitt (FS) um die Minichipkarte (3) geschaffenen Verbindungssteges gebildet. Der Verbindungssteg weist vorzugsweise entlang der Seitenkante (31) der Minichipkarte (3) sowohl auf der Vorder- als auch auf der Rückseite eine zusätzliche Einkerbung auf. Die Breite des Verbindungssteges entspricht in etwa der Breite des Freischnittes (FS) um die Minichipkarte (3).

Nun verläuft erfindungsgemäß auf der Trägerkarte (2) korrespondierend zum ersten Sollbruchbereich (S2) eine Sollbruchlinie/Sollknicklinie (SL) in Form einer auf der Kartenrückseite (11) eingebrachten Einkerbung. Dabei verläuft diese Sollbruchlinie/Sollknicklinie (SL) so auf der Trägerkarte (2), daß sie vom Freischnitt (FS) um die Minichipkarte (3) unterbrochen ist. Die Sollbruchlinie/Sollknicklinie (SL) ist parallel zur Querrichtung der Kunststoffkarte (1). Der Ausdruck "korrespondierend" meint, daß der Abstand zwischen der Sollbruchlinie/Sollknicklinie (SL) und dem ersten Sollbruchbereich (S1) geringer ist als zum zweiten Sollbruchbereich (S2), wobei infolge des Durchbrechens oder Knickens der Trägerkarte (2) entlang der Sollbruchlinie/Sollknicklinie (SL) der erste, "korrespondierende" Sollbruchbereich (S1) zwischen Minichipkarte (3) und Trägerkarte (2) zwangsläufig aufgetrennt wird.

Der Verlauf der Sollbruchlinie/Sollknicklinie ist in Fig.1 nur gestrichelt dargestellt, da die Einkerbung nur auf der Rückseite (12) der Kunststoffkarte (1) verläuft - s. Fig.2.

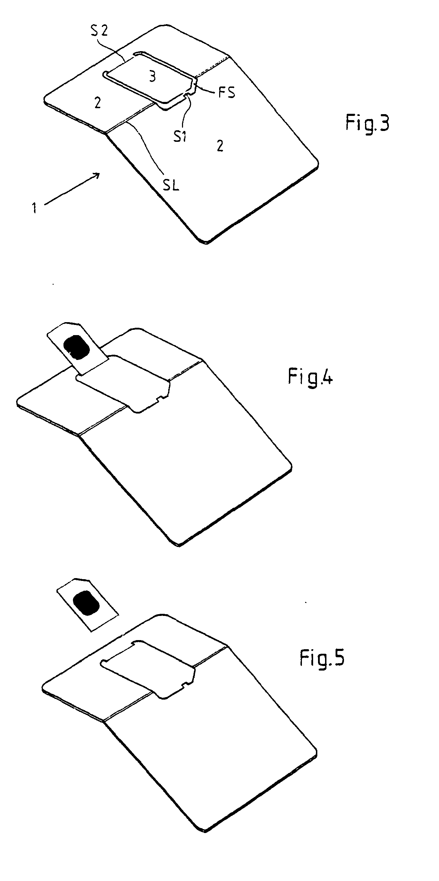

In Figur 3 ist die Kunststoffkarte (1) mit abgeknichkter Trägerkarte (2) und dadurch aufgetrenntem Verbindungssteg (erster Sollbruchbereich) zwischen Minichipkarte (3) und Trägerkarte (2) gezeigt. Die Minichipkarte (3) ist nur noch über das Trennlinienmaterial entlang der Einkerbung des zweiten Sollbruchbereiches (S2) an der Trägerkarte (2) gehalten.

In Figur 4 ist dargestellt, wie die Minichipkarte (3) entlang der Einkerbung am zweiten Sollbruchbereich (S2) aus der Ebene der Trägerkarte (2) herausgeschwenkt wird, um diese letztendlich von der Trägerkarte (2) zu trennen. Aufgrund der Schwenkbewegung bricht dann das Trennlinienmaterial. Um ein problemloses Verschwenken der Minichipkarte (3) zu ermöglichen ist die Breite (B) des Freischnittes (FS) größer als die Dicke (D) der Kunststoffkarte (1).

Figur 5 zeigt die geknickte Trägerkarte (2) und die davon vollständig getrennte Minichipkarte (3).

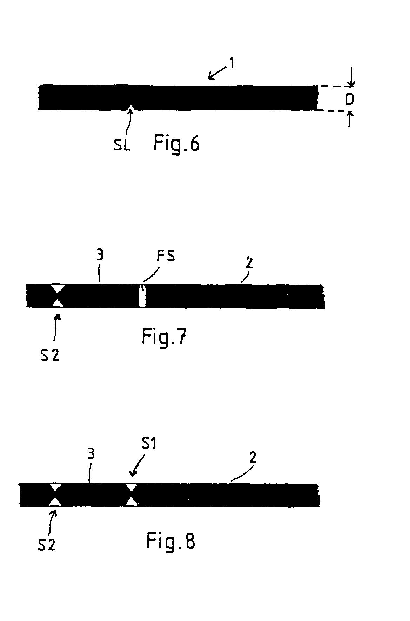

Fig. 6 zeigt einen Schnitt durch die Kunststoffkarte entlang der Schnittlinie A-A (Fig.1). Zu erkennen ist die V-förmige Einkerbung für die Sollbruchlinie/Sollknicklinie (SL) an der Unterseite der Kunststoffkarte (1).

Fig.7 zeigt einen Schnitt durch die Kunststoffkarte entlang der Schnittlinie B-B. Zu erkennen sind die V-förmigen Einkerbungen zu beiden Seiten der Kunststoffkarte (1) für den zweiten Sollbruchbereich (S2) und der Freischnitt (FS).

Fig.8 zeigt einen Schnitt durch die Kunststoffkarte (1) entlang der Schnittlinie C-C. Zu erkennen sind jeweils die V-förmigen Einkerbungen zu beiden Seiten der Kunststoffkarte (1) für die beiden Sollbruchbereiche (S1,S2).

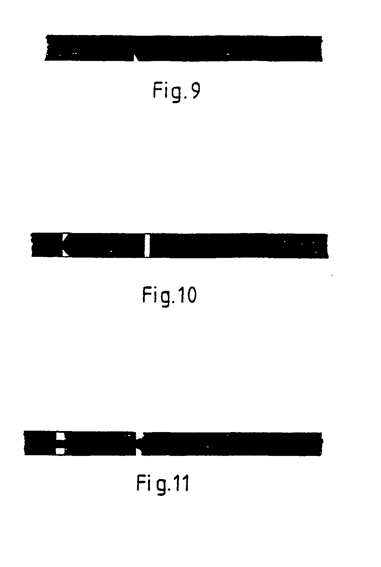

Statt V-förmiger Einkerbungen sind auch einseitig keilförmige, U-förmige oder trapezförmige Einkerbungen - vgl. Fig.9 bis 11 - vorgesehen.

Ferner ist es vorgesehen, die Einkerbungen in den Sollbruchbereichen (S1,S2) nur auf der Vorder- oder der Rückseite (10,11) der Kunststoffkarte (1) einzubringen.

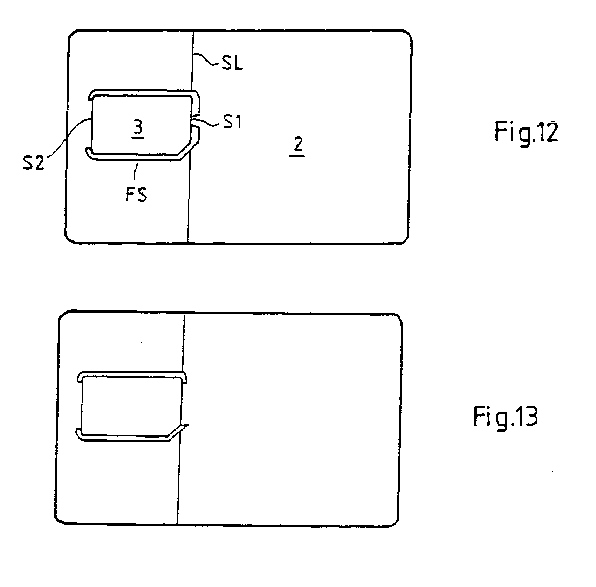

In Figur 12 ist eine Kunststoffkarte (1) gezeigt bei der die Sollbruchlinie/Sollknicklinie (SL) auf der Trägerkarte (2) fluchtend zur Seitenkante (30) des ersten Sollbruchbereiches (S1) verläuft. Figur 13 zeigt eine Karte wie in Fig.12, jedoch ist hier der Verbindungssteg im ersten Sollbruchbereich (S1) durch eine längere Einkerbung ersetzt.

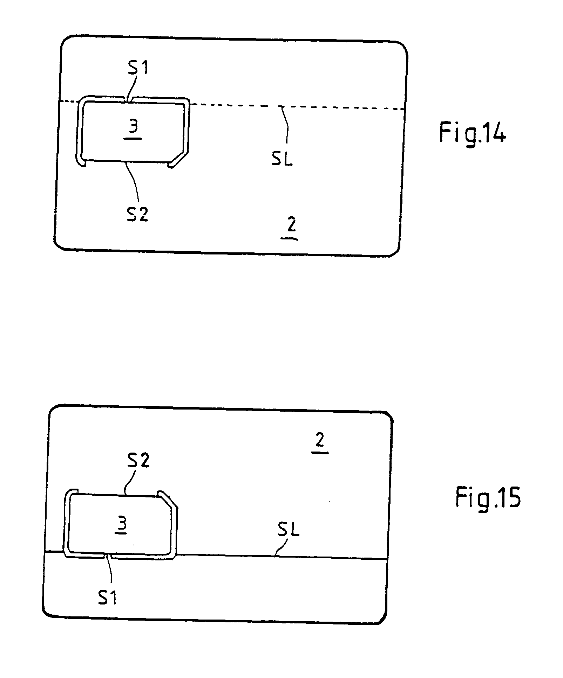

In Figur 14 ist eine Kunststoffkarte (1) im ID1 Format gezeigt, bei der die Sollbruchbereiche (S1,S2) entlang derjenigen Seitenkanten (32,33) der Minichipkarte (3) angeordnet sind, die parallel zu Längsrichtung der ID1 Karte verlaufen, wobei die Sollbruchlinie/Sollknicklinie (SL)-gestrichelt dargestellt- ebenfalls parallel zur Längsrichtung verläuft. Fig. 15 zeigt die Rückseite dieser Karte mit eingekerbter Sollbruchlinie/Sollknicklinie.

In Figur 16 ist eine Kunststoffkarte, (1) im ID1 Format gezeigt, bei der der erste Sollbruchbereich (S1) zwischen Minichipkarte (3) und Trägerkarte (2) an einem Eckbereich der Minichipkarte (3) angeordnet ist. Die Sollbruchlinie/Sollknicklinie (SL) auf der Trägerkarte (2) verläuft dabei parallel zur Tangente im gekrümmten Eckbereich.

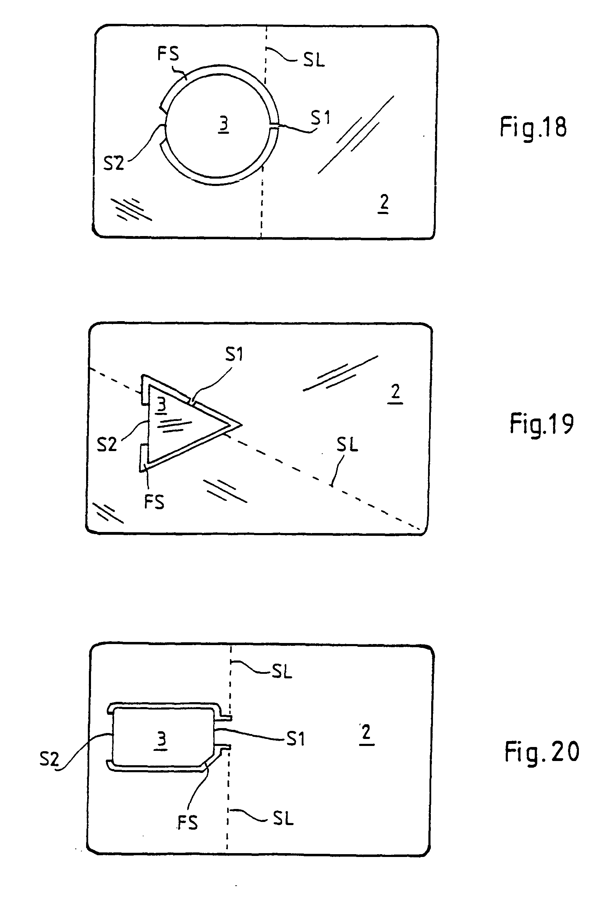

In Figur 18 ist eine Kunststoffkarte (1) mit einer kreisrunden Minichipkarte (3) gezeigt. In Fig.19 ist eine Kunststoffkarte (1) mit einer dreieckigen Minichipkarte gezeigt

In Fig.20 ist eine Kunststoffkarte (1) gezeigt, wo die Sollbruchlinie/Sollknicklinie (SL) außerhalb des Bereiches zwischen den beiden Sollbruchbereichen (S1,S2) verläuft. Beim Durchbrechen/Knicken der Trägerkarte entlang der Sollbruchlinie/Sollknicklinie (SL) entsteht dabei aufgrund der besonderen Ausbildung des Freischnittes (FS) eine Abreißlasche für die Verbindung zwischen Minichipkarte (3) und Trägerkarte (2) entlang des Sollbruchbereiches (S1).

Die Kunststoffkarte besteht aus mehreren, durch Lamination miteinander verbundenen Schichten, wobei die beiden Sollbruchbereiche (S1, S2) zwischen Minichipkarte (3) und Trägerkarte (2), der Freischnitt (FS) und Sollbruchlinie/Sollknicklinie (SL) auf der Trägerkarte (2) in einem separaten Verfahrensschritt mittels eines Stand- und Kerbwerkzeuges eingebracht werden.

Die Kunststoffkarte wird einstückig im Spritzgußverfahren hergestellt, wobei die beiden Sollbruchbereiche (S1, S2) zwischen Minichipkarte (3) und Trägerkarte (2), der Freischnitt (FS) und die Sollbruchlinie/Sollknicklinie (SL) auf der Trägerkarte (2) in einem separaten Verfahrensschritt mittels eines Stanz- und Kerbwerkezuges eingebracht werden.

Die Kunststoffkarte kann bereits mit den beiden Sollbruchbereichen (S1, S2) zwischen Minichipkarte (3) und Trägerkarte (2), dem Freischnitt (FS) und der Sollbruchlinie/Sollknicklinie (SL) auf der Trägerkarte (2) einstückig im Spritzgußverfahren hergestellt werden.

## Patentansprüche

1. Kunststoffkarte, bei der in einer Trägerkarte (2) eine Minichipkarte (1) heraustrennbar gehalten ist,
- zwischen der Minichipkarte (1) und der Trägerkarte (2) ein erster Sollbruchbereich (S1) in Form einer Einkerbung und/oder mindestens eines Verbindungssteges geschaffen ist,
- beabstandet zu diesem ersten Sollbruchbereich (S1) zwischen der Minichipkarte (1) und der Trägerkarte (2) ein zweiter Sollbruchbereich (S2) in Form einer Einkerbung und/oder mindestens eines Verbindungssteges geschaffen ist,
- die Minichipkarte (1) entlang ihrer Außenkontur bis auf die beiden Sollbruchbereiche (S1,S2) vollständig freigeschnitten ist.
**dadurch gekennzeichnet,**
- **daß** auf der Trägerkarte (2) eine SollbruchlinielSollknicklinie (SL) in Form einer geraden Einkerbung und/oder in Form von mehreren, auf einer Geraden liegenden, durch Freischnitte gebildeten Sollbruchstellen eingebracht ist und vom Freischnitt (FS) für die Minichipkarte (1) unterbrochen ist,
- **daß** die Sollbruchlinie/Sollknicklinie (SL) auf der Trägerkarte (2) so verläuft, daß diese sich von dem Freischnitt (FS) unterbrochen von einer Kante bis zu einer anderen Kante der Trägerkarte (2) erstreckt und
- entweder zwischen den beiden Sollbruchbereichen (S1, S2) so verläuft, dass der Abstand der Sollbruchlinie/Sollknicklinie (SL) zu einem der beiden Sollbruchbereiche (S1, S2) geringer ist als zu dem anderen oder durch einen der Sollbruchbereiche (S1; S2) verläuft und
- einer der beiden Sollbruchbereiche wesentlich breiter ist als der andere.

2. Kunststoffkarte nach Anspruch 1, **dadurch gekennzeichnet, dass** die Sollbruchlinie/Sollknicklinie (SL) parallel zur Einkerbung und/oder orthogonal zu dem Verbindungssteg des der Sollbruchlinie/Sollknicklinie (SL) näherliegenden bzw. anliegenden Sollbruchbereiches (S1, S2) verläuft.

3. Kunststoffkarte nach Anspruch 1, dadurch gekennzeichet, daß einer der beiden Sollbruchbereiche (S1,S2) zwischen Minichipkarte (3) und Trägerkarte (2) fluchtend zur Sollbruchlinie/Sollknicklinie (SL) auf der Trägerkarte (2) angeordnet ist.

4. Kunststoffkarte nach Anspruch 1, **dadurch gekennzeichnet, dass** der Verbindungssteg des der Sollbruchlinie/Sollknicklinie (SL) entfernter gelegenen Sollbruchbereiches (S1, S2), wesentlich breiter ist als der andere.

5. Kunststoffkarte nach einem der vorstehenden Ansprüche, **dadurch gekennzeichnet, daß** die Breite (B) des Freischnittes (FS) um die Minichipkarte (3) größer als die Dicke (D) der Kunststofflcarte (1) ist.

6. Kunststoffkarte nach einem der vorstehenden Ansprüche, **dadurch gekennzeichnet, daß** die Einkerbung im ersten Sollbruchbereich (S1) zwischen Minichipkarte (3) und Trägerkarte (2) sowohl auf der Vorderseite (10) als auch auf der Rückseite (11) der Kunststoffkarte (1) eingebracht ist

7. Kunststoffkarte nach einem der Ansprüche 1 bis 5, **dadurch gekennzeichnet, daß** die Einkerbung im ersten Sollbruchbereich (S1) zwischen Minichipkarte (3) und Trägerkarte (2) nur auf der Vorderseite (10) der Kunststoffkarte (1) eingebracht ist.

8. Kunststoffkarte nach einem der Ansprüche 1 bis 5, **dadurch gekennzeichnet, daß** die Einkerbung im ersten Sollbruchbereich (S1) zwischen Minichipkarte (3) und Trägerkarte (2) nur auf der Rückseite (11) der Kunststoffkarte (1) eingebracht ist.

9. Kunststoffkarte nach einem der vorstehenden Ansprüche, **dadurch gekennzeichnet, daß** die Dicke des Verbindungssteges bzw. der Verbindungsstege im ersten Sollbruchbereich (S1) geringer als die Dicke (D) der Kunststoffkarte (1) ausgebildet ist.

10. Kunststoffkarte nach einem der vorstehenden Ansprüche, **dadurch gekennzeichnet, daß** der Verbindungssteg bzw. die Verbindungsstege im ersten Sollbruchbereich (S1) entlang der Außenkontur der Minichipkarte (3) eine Einkerbung aufweisen.

11. Kunststoffkarte nach einem der vorstehenden Ansprüche, **dadurch gekennzeichnet, daß** die Einkerbung im zweiten Sollbruchbereich (S2) zwischen Minichipkarte (3) und Trägerkarte (2) sowohl auf der Vorderseite (10) als auch auf der Rückseite (11) der Kunststoffkarte (1) eingebracht ist.

12. Kunststoffkarte nach einem der Ansprüche 1 bis 8, **dadurch gekennzeichnet, daß** die Einkerbung im zweiten Sollbruchbereich (S2) zwischen Minichipkarte (3) und Trägerkarte (2) nur auf der Vorderseite (10) der Kunststoffkarte (1) eingebracht ist.

13. Kunststoffkarte nach einem der Ansprüche 1 bis 8, **dadurch gekennzeichnet, daß** die Einkerbung im zweiten Sollbruchbereich (S2) zwischen Minichipkarte (3) und Trägerkarte (2) nur auf der Rückseite (11) der Kunststoffkarte (1) eingebracht ist.

14. Kunststoffkarte nach einem der vorstehenden Ansprüche, **dadurch gekennzeichnet, daß** die Dicke des Verbindungssteges bzw. der Verbindungsstege im zweiten Sollbruchbereich (S2) geringer als die Dicke (D) der Kunststoffkarte (1) ausgebildet ist.

15. Kunststoffkarte nach einem der vorstehenden Ansprüche, **dadurch gekennzeichnet, daß** der Verbindungssteg bzw. die Verbindungsstege im zweiten Sollbruchbereich (S2) entlang der Außenkontur der Minichipkarte (3) eine Einkerbung aufweisen.

16. Kunststoffkarte nach einem der vorstehenden Ansprüche, **dadurch gekennzeichnet, daß** die beiden Sollbruchbereiche (S1,S2) zwischen Minichipkarte (3) und Trägerkarte (2) hinsichtlich ihrer Sollbruchkräfte bei einer zentralen oder gleichmäßigen Kraftbeaufschlagung der Minichipkarte (3) gleich stark ausgebildet sind.

17. Kunststoffkarte nach einer der Ansprüche 1 bis 15, **dadurch gekennzeichnet, daß** die beiden Sollbruchbereiche (S1,S2) zwischen Minichipkarte (3) und Trägerkarte (2) hinsichtlich ihrer Sollbruchkräfte bei einer zentralen oder gleichmäßigen Kraftbeaufschlagung der Minichipkarte unterschiedlich stark ausgebildet sind.

18. Kunststoffkarte nach einem der vorstehenden Ansprüche, **dadurch gekennzeichnet, daß** die Einkerbung entlang der Sollbruchlinie/Sollknicklinie (SL) auf der Trägerkarte (2) nur auf der Rückseite (11) der Kunststoffkarte (1) eingebracht ist.

19. Kunststoffkarte nach einem der Ansprüche 1 bis 17, **dadurch gekennzeichnet, daß** die Einkerbung entlang der Sollbruchlinie/Sollknicklinie (SL) auf der Trägerkarte (2) nur auf der Vorderseite (10) der Kunststoffkarte (1) eingebracht ist.

20. Kunststoffkarte nach einem der Ansprüche 1 bis 17, **dadurch gekennzeichnet, daß** die Einkerbung entlang der Sollbruchlinie/Sollknicklinie (SL) auf der Trägerkarte (2) sowohl auf der Rückseite (11) als auch auf der Vorderseite (10) der Kunststoffkarte (1) eingebracht ist.

21. Kunststoffkarte nach einem der vorstehenden Ansprüche, **dadurch gekennzeichnet, daß** in die durch Freischnitte (FS) entlang der Sollbruchlinie/Sollknicklinie (SL) auf der Trägerkarte (2) gebildeten Sollbruchstellen zusätzlich eine Einkerbung eingebracht ist.

22. Kunststoffkarte nach einem der vorstehenden Ansprüche, **dadurch gekennzeichnet, daß** die Minichipkarte (3) mehrseitig ausgebildet ist

23. Kunststoffkarte nach Anspruch 22, **dadurch gekennzeichnet, daß**
- der erste Sollbruchbereich (S1) zwischen Minichipkarte (3) und Trägerkarte (2) entlang einer ersten Seitenkante (30) der Minichipkarte (3) verläuft,
- der zweite Sollbruchbereich (S2) zwischen Minichipkarte (3) und Trägerkarte (2) entlang einer zweiten Seitenkante (31) der Minichipkarte (3) verläuft,
- die Sollbruchlinie/Sollknicklinie (SL) auf der Trägerkarte (2) parallel zur ersten oder zweiten Seitenkante (30,31) der Minichipkarte (3) verläuft.

24. Kunststoffkarte nach Anspruch 22, **dadurch gekennzeichnet, daß** der erste Sollbruchbereich (S1) zwischen Minichipkarte (3) und Trägerkarte (2) an einem Eckbereich (32) der Minichipkarte (3) angeordnet ist, und der zweite Sollbruchbereich (S2) entlang einer zu diesem Eckbereich (32) nicht benachbarten Seitenkante der Minichipkarte (3) angeordnet ist.

25. Kunststoffkarte nach Anspruch 24, **dadurch gekennzeichnet, daß** die Sollbruchlinie/Sollknicklinie (SL) auf der Trägerkarte (2) parallel zu der dem zweiten Sollbruchbereich (S2) zwischen Minichipkarte (3) und Trägerkarte (2) zugeordneten Seitenkante der Minichipkarte (3) verläuft.

26. Kunststoffkarte nach Anspruch 24, **dadurch gekennzeichnet, daß** die Sollbruchlinie/Sollknicklinie (SL) auf der Trägerkarte (2) parallel zur Tangente im gekrümmten Eckbereich (32), der dem ersten Sollbruchbereich (S1) zugeordnet ist, verläuft.

27. Kunststoffkarte nach einem der vorstehenden Ansprüche, **dadurch gekennzeichnet, daß** dieselbe das Format einer ID1 Karte gemäß ISO 7810 und die Minichipkarte (3) das im wesentliche fünfseitige Format einer ID000 Karte aufweist, wobei diese Minichipkarte (3) so in der Trägerkarte (2) angeordnet ist, daß die Lage von Kontakten auf der Minichipkarte (3) der Chipkartennorm ISO 7816-2 entspricht.

28. Kunststoffkarte nach Anspruch 27, **dadurch gekennzeichnet, daß** die beiden Sollbruchbereiche (S1,S2) zwischen Minichipkarte (3) und Trägerkarte (2) entlang derjenigen Seitenkanten (31,32) der Minichipkarte (3) angeordnet sind, die parallel zu den kurzen Kanten (12) der ID1-Karte verlaufen, wobei die Sollbruchlinie/Sollknicklinie (SL) auf der Trägerkarte (2) ebenfalls parallel zur Querrichtung der ID1 Karte verläuft.

29. Kunststoffkarte nach Anspruch 27, **dadurch gekennzeichnet, daß** die beiden Sollbruchbereiche (S1,S2) zwischen Minichipkarte (3) und Trägerkarte (2) entlang derjenigen Seitenkanten (30,31) der Minichipkarte (3) angeordnet sind, die parallel zu den langen Kanten (13) der ID1-Karte verlaufen, wobei die Sollbruchlinie/Sollknicklinie (SL) auf der Trägerkarte (2) ebenfalls parallel zur Längsrichtung der ID1 Karte verläuft.

30. Kunststoffkarte nach einem der vorstehenden Ansprüche, **dadurch gekennzeichnet, daß** die Einkerbungen für die beiden Sollbruchbereiche (S1,S2) zwischen Minichipkarte (3) und Trägerkarte (2) und/oder für die Sollbruchlinie/Sollknicklinie (SL) auf der Trägerkarte (2) ein einseitig keilförmiges Profil aufweisen.

31. Kunststoffkarte nach einem der vorstehenden Ansprüche, **dadurch gekennzeichnet, daß** die Einkerbungen für die beiden Sollbruchbereiche (S1,S2) zwischen Minichipkarte (3) und Trägerkarte (2) und/oder für die Sollbruchlinie/Sollknicklinie (SL) auf der Trägerkarte (2) ein V-förmiges Profil aufweisen.

32. Kunststoffkarte nach einem der vorstehenden Ansprüche, **dadurch gekennzeichnet, daß** die Einkerbungen für die beiden Sollbruchbereiche (S1,S2) zwischen Minichipkarte (3) und Trägerkarte (2) und/oder für die Sollbruchlinie/Sollknicklinie (SL) auf der Trägerkarte (2) ein U-förmiges Profil aufweisen.

33. Kunststoffkarte nach einem der vorstehenden Ansprüche, **dadurch gekennzeichnet, daß** die Einkerbungen für die beiden Sollbruchbereiche (S1,S2) zwischen Minichipkarte (3) und Trägerkarte (2) und/oder für die Sollbruchlinie/Sollknicklinie (SL) auf der Trägerkarte (2) ein trapezförmiges Profil aufweisen.

34. Kunststoffkarte nach einem der vorstehenden Ansprüche, **dadurch gekennzeichnet, daß** sie aus mehreren laminierten Schichten besteht

35. Verfahren zur Herstellung einer Kunsstoffkarte nach Anspruch 34, **dadurch gekennzeichnet, daß** in einem ersten Schritt die Schichten laminiert werden und in einem zweiten Schritt die beiden Sollbruchbereiche (S1,S2) zwischen Minichipkarte (3) und Trägerkarte (2), der Freischnitt (FS) und die Sollbruchlinie/Sollknicklinie (SL) auf der Trägerkarte (2) mittels eines Stanz- und Kerbwerkzeuges eingebracht werden.

36. Kunststoffkarte nach einem der Ansprüche 1-33, **dadurch gekennzeichnet, daß** sie eine spritzgegossene Karte ist

37. Verfahren zur Herstellung einer Kunststoffkarte nach Anspruch 36, **dadurch gekennzeichnet, daß** in einem ersten Schritt die Karte spritzgegossen wird und in einem zweiten Schritt die beiden Sollbruchbereiche (S1,S2) zwischen Minichipkarte (3) und Trägerkarte (2), der Freischnitt (FS) und die Sollbruchlinie/Sollknicklinie (SL) auf der Trägerkarte (2) mittelseines Stanz- und Kerbwerkzeuges eingebracht werden.

38. Verfahren zur Herstellung einer Kunststoffkarte nach Anspruch 36, **dadurch gekennzeichnet, daß** dieselbe mit den beiden Sollbruchbereichen (S1,S2) zwischen Minichipkarte (3) und Trägerkarte (2), dem Freischnitt (FS) und der Sollbruchlinie/Sollknicklinie (SL) auf der Trägerkarte (2) in einem Verfahrensschritt hergestellt wird.

## Claims

1. A plastics card, in which a mini smart card (1) is held separably in a carrier card (2),
- a first breaking region (S1) in the form of a notch and/or at least one connecting web is created between the mini smart card (1) and the carrier card (2),
- a second breaking region (S2) in the form of a notch and/or at least one connecting web is created at a distance from this first breaking region (S1) between the mini smart card (1) and the carrier card (2),
- the mini smart card (1) is completely cut free along its outer contour apart from the two breaking regions (S1, S2).
**characterised in that**
- a breaking line/bending line (SL) in the form of a straight notch and/or in the form of a plurality of breaking points arranged in a straight line and formed by cutouts is provided on the carrier card (2) and is interrupted by the cutout (FS) for the mini smart card (1).
- the breaking line/bending line (SL) runs over the carrier card (2) such that it extends, interrupted by the cutout (FS), from one edge to another edge of the carrier card (2), and
- either runs between the two breaking regions (S1, S2) such that the distance between the breaking line/bending line (SL) and one of the two breaking regions (S1, S2) is smaller than the distance to the other breaking region, or runs through one of the breaking regions (S1; S2), and
- one of the two breaking regions is much wider than the other.

2. The plastics card according to Claim 1, **characterised in that** the breaking line/bending line (SL) runs parallel to the notch and/or orthogonal to the connecting web of the breaking region (S1, S2) arranged closer to or adjacent to the breaking line/bending line (SL).

3. The plastics card according to Claim 1, **characterised in that** one of the two breaking regions (S1, S2) is arranged on the carrier card (2) between the mini smart card (3) and the carrier card (2), aligned with the breaking line/bending line (SL).

4. The plastics card according to Claim 1, **characterised in that** the connecting web of the breaking region (S1, S2) placed farther from the breaking line/bending line (SL) is□□much wider than the other.

5. The plastics card according to one of the preceding claims, **characterised in that** the width (B) of the cutout (FS) around the mini smart card (3) is greater than the thickness (D) of the plastics card (1).

6. The plastics card according to one of the preceding claims, **characterised in that** the notch in the first breaking region (S1) between the mini smart card (3) and the carrier card (2) is provided both on the front side (10) and on the rear side (11) of the plastics card (1).

7. The plastics card according to one of Claims 1 to 5, **characterised in that** the notch in the first breaking region (S1) between the mini smart card (3) and the carrier card (2) is provided merely on the front side (10) of the plastics card (1).

8. The plastics card according to one of Claims 1 to 5, **characterised in that** the notch in the first breaking region (S1) between the mini smart card (3) and the carrier card (2) is provided merely on the rear side (11) of the plastics card (1).

9. The plastics card according to one of the preceding claims, **characterised in that** the thickness of the connecting web or of the connecting webs in the first breaking region (S1) is smaller than the thickness (D) of the plastics card (1).

10. The plastics card according to one of the preceding claims, **characterised in that** the connecting web or the connecting webs has/have a notch in the first breaking region (S1) along the outer contour of the mini smart card (3).

11. The plastics card according to one of the preceding claims, **characterised in that** the notch in the second breaking region (S2) between the mini smart card (3) and the carrier card (2) is provided both on the front side (10) and on the rear side (11) of the plastics card (1).

12. The plastics card according to one of Claims 1 to 8, **characterised in that** the notch in the second breaking region (S2) between the mini smart card (3) and the carrier card (2) is provided merely on the front side (10) of the plastics card (1).

13. The plastics card according to one of Claims 1 to 8, **characterised in that** the notch in the second breaking region (S2) between the mini smart card (3) and the carrier card (2) is provided merely on the rear side (11) of the plastics card (1).

14. The plastics card according to one of the preceding claims, **characterised in that** the thickness of the connecting web or of the connecting webs in the second breaking region (S2) is smaller than the thickness (D) of the plastics card (1).

15. The plastics card according to one of the preceding claims, **characterised in that** the connecting web or the connecting webs has/have a notch in the second breaking region (S2) along the outer contour of the mini smart card (3).

16. The plastics card according to one of the preceding claims, **characterised in that** the two breaking regions (S1, S2) between the mini smart card (3) and carrier card (2) are formed with equal strength in terms of their breaking forces with a central or uniform application of force to the mini smart card (3).

17. The plastics card according to one of Claims 1 to 15, **characterised in that** the two breaking regions (S1, S2) between the mini smart card (3) and carrier card (2) are formed with different strength in terms of their breaking forces with a central or uniform application of force to the mini smart card.

18. The plastics card according to one of the preceding claims, **characterised in that** the notch along the breaking line/bending line (SL) on the carrier card (2) is provided merely on the rear side (11) of the plastics card (1).

19. The plastics card according to one of Claims 1 to 17, **characterised in that** the notch along the breaking line/bending line (SL) on the carrier card (2) is provided merely on the front side (10) of the plastics card (1).

20. The plastics card according to one of Claims 1 to 17, **characterised in that** the notch along the breaking line/bending line (SL) on the carrier card (2) is provided both on the rear side (11) and on the front side (10) of the plastics card (1).

21. The plastics card according to one of the preceding claims, **characterised in that** a notch is additionally provided in the breaking points formed by cutouts (FS) along the breaking line/bending line (SL) on the carrier card (2).

22. The plastics card according to one of the preceding claims, **characterised in that** the mini smart card (3) is multilateral.

23. The plastics card according to Claim 22, **characterised in that**
- the first breaking region (S1) runs between the mini smart card (3) and the carrier card (2) along a first side edge (30) of the mini smart card (3),
- the second breaking region (S2) runs between the mini smart card (3) and the carrier card (2) along a second side edge (31) of the mini smart card (3),
- the breaking line/bending line (SL) runs over the carrier card (2) parallel to the first or second side edge (30, 31) of the mini smart card (3).

24. The plastics card according to Claim 22, **characterised in that** the first breaking region (S1) is arranged between the mini smart card (3) and carrier card (2) in a corner region (32) of the mini smart card (3), and the second breaking region (S2) is arranged along a side edge of the mini smart card (3), said side edge not being adjacent to this corner region (32).

25. The plastics card according to Claim 24, **characterised in that** the breaking line/bending line (SL) runs over the carrier card (2) parallel to the side edge of the mini smart card (3) assigned to the second breaking region (S2) between the mini smart card (3) and the carrier card (2).

26. The plastics card according to claim 24, **characterised in that** the breaking line/bending line (SL) runs over the carrier card (2) parallel to the tangent in the curved corner region (32) assigned to the first breaking region (S1).

27. The plastics card according to one of the preceding claims, **characterised in that** said plastics card has the format of an ID1 card according to ISO 7810 and the mini smart card (3) has the substantially five-sided format of an ID000 card, this mini smart card (3) being arranged in the carrier card (2) such that the position of contacts on the mini smart card (3) corresponds to smart card standard ISO 7816-2.

28. The plastics card according to Claim 27 **characterised in that** the two breaking regions (S1, S2) are arranged between the mini smart card (3) and the carrier card (2) along the side edges (31, 32) of the mini smart card (3) that run parallel to the short edges (12) of the ID1 card, the breaking line/bending line (SL) running over the carrier card (2) likewise parallel to the transverse direction of the ID1 card.

29. The plastics card according to Claim 27, **characterised in that** the two breaking regions (S1, S2) are arranged between the mini smart card (3) and the carrier card (2) along the side edges (30, 31) of the mini smart card (3) that run parallel to the long edges (13) of the ID1 card, the breaking line/bending line (SL) running over the carrier card (2) likewise parallel to the longitudinal direction of the ID1 card.

30. The plastics card according to one of the preceding claims, **characterised in that** the notches for the two breaking regions (S1, S2) between the mini smart card (3) and the carrier card (2) and/or for the breaking line/bending line (SL) on the carrier card (2) have a one-sided wedge-shaped profile.

31. The plastics card according to one of the preceding claims, **characterised in that** the notches for the two breaking regions (S1, S2) between the mini smart card (3) and the carrier card (2) and/or for the breaking line/bending line (SL) on the carrier card (2) have a V-shaped profile.

32. The plastics card according to one of the preceding claims, **characterised in that** the notches for the two breaking regions (S1, S2) between the mini smart card (3) and the carrier card (2) and/or for the breaking line/bending line (SL) on the carrier card (2) have a U-shaped profile.

33. The plastics card according to one of the preceding claims, **characterised in that** the notches for the two breaking regions (S1, S2) between the mini smart card (3) and the carrier card (2) and/or for the breaking line/bending line (SL) on the carrier card (2) have a trapezoidal profile.

34. The plastics card according to one of the preceding claims, **characterised in that** it consists of a plurality of laminated layers.

35. A method for producing a plastics card according to Claim 34, **characterised in that**, in a first step, the layers are laminated and, in a second step, the two breaking regions (S1, S2) between the mini smart card (3) and the carrier card (2), the cutout (FS) and the breaking line/bending line (SL) on the carrier card (2) are provided by means of a punching and notching tool.

36. The plastics card according to one of Claims 1 to 33, **characterised in that** it is an injection-moulded card.

37. A method for producing a plastics card according to Claim 36, **characterised in that**, in a first step, the card is injection moulded and, in a second step, the two breaking regions (S1, S2) between the mini smart card (3) and the carrier card (2), the cutout (FS) and the breaking line/bending line (SL) on the carrier card (2) are provided by means of a punching and notching tool.

38. A method for producing a plastics card according to Claim 36, **characterised in that** said plastics card with the two breaking regions (S1, S2) between the mini smart card (3) and the carrier card (2), the cutout (FS) and the breaking line/bending line (SL) on the carrier card (2) is produced in a single method step.

## Revendications

1. Carte en matière plastique, dans laquelle une mini-carte à puce (1) peut être détachée d'une carte porteuse (2),
- un premier point de rupture (S1) est créé entre la mini-carte à puce (1) et la carte porteuse (2) sous la forme d'une entaille et/ou d'au moins un pont de liaison,
- il est créé à distance de ce premier point de rupture (S1) entre la mini-carte à puce (1) et la carte porteuse (2) un deuxième point de rupture (S2) sous la forme d'une entaille et/ou d'au moins un pont de liaison,
- la mini-carte à puce (1), hormis les deux points de rupture (S1, S2), est entièrement détourée sur son contour extérieur,
**caractérisée**
- **en ce qu'**il est formé sur la carte porteuse (2) une ligne de rupture/ligne de pliage (SL), sous la forme d'une encoche rectiligne et/ou sous la forme de plusieurs points de rupture formés par des découpes et situés sur une droite, qui est interrompue par le détourage (FS) de la mini-carte à puce (1),
- **en ce que** la ligne de rupture/ligne de pliage (SL) est implantée sur la carte porteuse (2) de manière qu'elle s'étende d'un bord à l'autre en étant interrompue par le détourage (FS), et
- est implantée entre les deux points de rupture (S1, S2) de manière que la distance de la ligne de rupture/ligne de pliage (SL) à l'un des deux points de rupture (S1, S2) soit plus courte que la distance à l'autre, ou bien passe par l'un des deux points de rupture (S1, S2) et
- **en ce que** l'un des points de rupture est nettement plus large que l'autre.

2. Carte en matière plastique selon la revendication 1, **caractérisée en ce que** la ligne de rupture/ligne de pliage (SL) est parallèle à l'encoche et/ou orthogonale au pont de liaison du point de rupture (S1, S2) proche de la ligne de rupture/ligne de pliage (SL) ou adjacent à celle-ci.

3. Carte en matière plastique selon la revendication 1, **caractérisée en ce que** l'un des deux points de rupture (S1, S2) entre la mini-carte à puce (3) et la carte porteuse (2) est aligné avec la ligne de rupture/ligne de pliage (SL) sur la carte porteuse (2).

4. Carte en matière plastique selon la revendication 1, **caractérisée en ce que** le pont de liaison du point de rupture (S1, S2) le plus éloigné de la ligne de rupture/ligne de pliage (SL) est nettement plus large que l'autre.

5. Carte en matière plastique selon l'une des revendications précédentes, **caractérisée en ce que** la largeur (B) du détourage (FS) autour de la mini-carte à puce (3) est supérieure à l'épaisseur (D) de la carte en matière plastique (1).

6. Carte en matière plastique selon l'une des revendications précédentes, **caractérisée en ce que** l'encoche du premier point de rupture (S1) entre la mini-carte à puce (3) et la carte porteuse (2) est ménagée à la fois sur la face avant (10) et sur la face arrière (11) de la carte en matière plastique (1).

7. Carte en matière plastique selon l'une des revendications 1 à 5, **caractérisée en ce que** l'encoche du premier point de rupture (S1) entre la mini-carte à puce (3) et la carte porteuse (2) n'est ménagée que sur la face avant (10) de la carte en matière plastique (1).

8. Carte en matière plastique selon l'une des revendications 1 à 5, **caractérisée en ce que** l'encoche du premier point de rupture (S1) entre la mini-carte à puce (3) et la carte porteuse (2) n'est ménagée que sur la face arrière (11) de la carte en matière plastique (1).

9. Carte en matière plastique selon l'une des revendications précédentes, **caractérisée en ce que** l'épaisseur du ou des ponts de liaison du premier point de rupture (S1) est inférieure à l'épaisseur (D) de la carte en matière plastique (1).

10. Carte en matière plastique selon l'une des revendications précédentes, **caractérisée en ce que** le ou les ponts de liaison du premier point de rupture (S1) présentent une encoche le long du contour extérieur de la mini-carte à puce (3).

11. Carte en matière plastique selon l'une des revendications précédentes, **caractérisée en ce que** l'encoche du deuxième point de rupture (S2) entre la mini-carte à puce (3) et la carte porteuse (2) est ménagée à la fois sur la face avant (10) et sur la face arrière (11) de la carte en matière plastique (1).

12. Carte en matière plastique selon l'une des revendications 1 à 8, **caractérisée en ce que** l'encoche du deuxième point de rupture (S2) entre la mini-carte à puce (3) et la carte porteuse (2) n'est ménagée que sur la face avant (10) de la carte en matière plastique (1).

13. Carte en matière plastique selon l'une des revendications 1 à 8, **caractérisée en ce que** l'encoche du deuxième point de rupture (S2) entre la mini-carte à puce (3) et la carte porteuse (2) n'est ménagée que sur la face arrière (11) de la carte en matière plastique (1).

14. Carte en matière plastique selon l'une des revendications précédentes, **caractérisée en ce que** l'épaisseur du ou des ponts de liaison du deuxième point de rupture (S2) est inférieure à l'épaisseur (D) de la carte en matière plastique (1).

15. Carte en matière plastique selon l'une des revendications précédentes, **caractérisée en ce que** le ou les ponts de liaison du deuxième point de rupture (S2) présentent une encoche le long du contour extérieur de la mini-carte à puce (3).

16. Carte en matière plastique selon l'une des revendications précédentes, **caractérisée en ce que** les deux points de rupture (S1, S2) entre la mini-carte à puce (3) et la carte porteuse (2) sont configurés de manière que les forces de rupture soient identiques en cas d'application d'une force centrale ou régulière sur la mini-carte à puce (3).

17. Carte en matière plastique selon l'une des revendications 1 à 15, **caractérisée en ce que** les deux points de rupture (S1, S2) entre la mini-carte à puce (3) et la carte porteuse (2) sont configurés de manière que les forces de rupture soient différentes en cas d'application d'une force centrale ou régulière sur la mini-carte à puce.

18. Carte en matière plastique selon l'une des revendications précédentes, **caractérisée en ce que** l'encoche le long de la ligne de rupture/ligne de pliage (SL) sur la carte porteuse (2) n'est ménagée que sur la face arrière (11) de la carte en matière plastique (1).

19. Carte en matière plastique selon l'une des revendications 1 à 17, **caractérisée en ce que** l'encoche le long de la ligne de rupture/ligne de pliage (SL) sur la carte porteuse (2) n'est ménagée que sur la face avant (10) de la carte en matière plastique (1).

20. Carte en matière plastique selon l'une des revendications 1 à 17, **caractérisée en ce que** l'encoche le long de la ligne de rupture/ligne de pliage (SL) sur la carte porteuse (2) est ménagée aussi bien sur la face arrière (11) que sur la face avant (10) de la carte en matière plastique (1).

21. Carte en matière plastique selon l'une des revendications précédentes, **caractérisée en ce que** les points de rupture formés par des détourages (FS) le long de la ligne de rupture/ligne de pliage (SL) sur la carte porteuse (2) comportent en outre une encoche.

22. Carte en matière plastique selon l'une des revendications précédentes, **caractérisée en ce que** la mini-carte à puce (3) comporte plusieurs côtés.

23. Carte en matière plastique selon la revendication 22, **caractérisée en ce que** :
- le premier point de rupture (S1) entre la mini-carte à puce (3) et la carte porteuse (2) s'étend le long d'une première arête latérale (30) de la mini-carte à puce (3),
- le deuxième point de rupture (S2) entre la mini-carte à puce (3) et la carte porteuse (2) s'étend le long d'une deuxième arête latérale (31) de la mini-carte à puce (3),
- la ligne de rupture/ligne de pliage (SL) sur la carte porteuse (2) est parallèle à la première ou à la deuxième arête latérale (30, 31) de la mini-carte à puce (3).

24. Carte en matière plastique selon la revendication 22, **caractérisée en ce que** le premier point de rupture (S1) entre la mini-carte à puce (3) et la carte porteuse (2) est disposé au niveau d'un angle (32) de la mini-carte à puce (3) et **en ce que** le deuxième point de rupture (S2) est disposé le long d'une arête latérale de la mini-carte à puce (3) qui n'est pas adjacente à cet angle (32).

25. Carte en matière plastique selon la revendication 24, **caractérisée en ce que** la ligne de rupture/ligne de pliage (SL) sur la carte porteuse (2) est parallèle à l'arête latérale de la mini-carte à puce (3) associée au deuxième point de rupture (S2) entre la mini-carte à puce (3) et la carte porteuse (2).

26. Carte en matière plastique selon la revendication 24, **caractérisée en ce que** la ligne de rupture/ligne de pliage (SL) sur la carte porteuse (2) est parallèle à la tangente à l'angle courbe (32) qui est associé au premier point de rupture (S1).

27. Carte en matière plastique selon l'une des revendications précédentes, **caractérisée en ce que** celle-ci possède le format d'une carte ID1 selon ISO 7810 et **en ce que** la mini-carte à puce (3) possède le format essentiellement pentagonal d'une carte ID000, cette mini-carte à puce (3) étant disposée dans la carte porteuse (2) de manière que la position de contacts sur la mini-carte à puce (3) corresponde à la norme de carte à puce ISO 7816-2.

28. Carte en matière plastique selon la revendication 27, **caractérisée en ce que** les deux points de rupture (S1, S2) entre la mini-carte à puce (3) et la carte porteuse (2) sont disposés le long des arêtes latérales (31, 32) de la mini-carte à puce (3) qui sont parallèles aux petits côtés (12) de la carte ID1, la ligne de rupture/ligne de pliage (SL) sur la carte porteuse (2) étant également parallèle à la direction transversale de la carte ID1.

29. Carte en matière plastique selon la revendication 27, **caractérisée en ce que** les deux points de rupture (S1, S2) entre la mini-carte à puce (3) et la carte porteuse (2) sont disposés le long des arêtes latérales (30, 31) de la mini-carte à puce (3) qui sont parallèles aux grands côtés (13) de la carte ID1, la ligne de rupture/ligne de pliage (SL) sur la carte porteuse (2) étant également parallèle à la direction longitudinale de la carte ID1.

30. Carte en matière plastique selon l'une des revendications précédentes, **caractérisée en ce que** les encoches pour les deux points de rupture (S1, S2) entre la mini-carte à puce (3) et la carte porteuse (2) et/ou pour la ligne de rupture/ligne de pliage (SL) sur la carte porteuse (2) possèdent un profil en forme de coin unilatéral.

31. Carte en matière plastique selon l'une des revendications précédentes, **caractérisée en ce que** les encoches pour les deux points de rupture (S1, S2) entre la mini-carte à puce (3) et la carte porteuse (2) et/ou pour la ligne de rupture/ligne de pliage (SL) sur la carte porteuse (2) possèdent un profil en forme de V.

32. Carte en matière plastique selon l'une des revendications précédentes, **caractérisée en ce que** les encoches pour les deux points de rupture (S1, S2) entre la mini-carte à puce (3) et la carte porteuse (2) et/ou pour la ligne de rupture/ligne de pliage (SL) sur la carte porteuse (2) possèdent un profil en forme de U.

33. Carte en matière plastique selon l'une des revendications précédentes, **caractérisée en ce que** les encoches pour les deux points de rupture (S1, S2) entre la mini-carte à puce (3) et la carte porteuse (2) et/ou pour la ligne de rupture/ligne de pliage (SL) sur la carte porteuse (2) possèdent un profil en forme de trapèze.

34. Carte en matière plastique selon l'une des revendications précédentes, **caractérisée en ce que** celle-ci est composée de plusieurs couches colaminées.

35. Procédé de fabrication d'une carte en matière plastique selon la revendication 34, **caractérisé en ce que**, dans une première étape, les couches sont colaminées et, dans une deuxième étape, les deux points de rupture (S1, S2) entre la mini-carte à puce (3) et la carte porteuse (2), le détourage (FS) et la ligne de rupture/ligne de pliage (SL) sont réalisés sur la carte porteuse (2) à l'aide d'un outil d'estampage et d'encochage.

36. Carte en matière plastique selon l'une des revendications 1 à 33, **caractérisée en ce que** celle-ci est une carte moulée par injection.

37. Procédé de fabrication d'une carte en matière plastique selon la revendication 36, **caractérisé en ce que**, dans une première étape, la carte est moulée par injection et, dans une deuxième étape, les deux points de rupture (S1, S2) entre la mini-carte à puce (3) et la carte porteuse (2), le détourage (FS) et la ligne de rupture/ligne de pliage (SL) sont réalisés sur la carte porteuse (2) à l'aide d'un outil d'estampage et d'encochage.

38. Procédé de fabrication d'une carte en matière plastique selon la revendication 36, **caractérisé en ce que** celle-ci est fabriquée en une seule étape de procédé avec les deux points de rupture (S1, S2) entre la mini-carte à puce (3) et la carte porteuse (2), le détourage (FS) et la ligne de rupture/ligne de pliage (SL) sur la carte porteuse (2).
